# EUROPEAN PATENT SPECIFICATION

(11) **EP 2 553 015 B1**
(45) Date of publication and mention of the grant of the patent: **15.01.2014**
(21) Application number: 11707980.6
(22) Date of filing: 03.03.2011
(51) Int. Cl.: C08L 23/08, C08K 3/22, C08K 5/134, C08L 23/06, C08K 5/378, C08K 9/06, C08K 5/00

(54) **RADIATION-CURABLE INSULATION COMPOSITION**
STRAHLUNGSHÄRTBARE ISOLIERUNGSZUSAMMENSETZUNG
COMPOSITION D'ISOLATION POUVANT DURCIR PAR RAYONNEMENT

(30) Priority: 30.03.2010 US 798120
(43) Date of publication of application: 06.02.2013
(73) Proprietor: Equistar Chemicals, LP, Houston, TX 77010 (US)
(72) Inventor: BROWN, Karl, M., Maineville OH 45039 (US); STREBEL, Jeffrey, J., Cincinnati OH 45244 (US)
(74) Representative: Sacco, Marco
(86) International application number: PCT/US2011/026998
(87) International publication number: WO 2011/123212

(56) References cited:
- EP-A2- 1 092 752
- US-A- 5 418 272
- US-B1- 6 287 692
- US-B1- 6 326 422

## Description

### FIELD OF THE INVENTION

The invention relates to a radiation-curable insulation composition. More particularly, the invention relates to a radiation-curable insulation composition having improved abrasion resistance.

### BACKGROUND OF THE INVENTION

Flame retardant polyolefin insulation compositions for wire and cable applications are known. See U.S. Pat. No. 6,372,828. The insulation composition comprises an ethylene-alkyl acrylate copolymer, brominated flame retardant, antimony trioxide, hydrated inorganic filler, crosslinking agent, and two-component stabilizer consisting of a zinc salt of a mercaptobenzimidazole and aromatic secondary amine. While the formulations meet the requirements of UL Standard 1581 and, more specifically, UL Subject 758, Style 3321, they do not meet the stringent needle abrasion requirements of ISO 6722, Section 9.2.

Moisture-curable flame retardant compositions suitable for use as insulation for wire and cable products are also known. See U.S. Pat. No. 6,998,443. The insulation composition comprises ethylene-silane copolymer, high density polyethylene (HDPE), halogenated flame retardant, silanol condensation catalyst, and a stabilizer component which is a combination of a zinc mercaptobenzimidazole and aromatic secondary amine. The composition exhibits improved needle abrasion resistance.

Further, radiation-curable wire and cable insulation compositions are known. See U.S. Pat. No. 6,326,422. The composition comprises an ethylene-vinyl acetate copolymer, hydrated inorganic filler, alkoxysilane, and zinc salt of a mercaptobenzimidazole. It is coated on wire and cable and cured by e-beam or other radiation sources. The composition is particularly useful for fabricating low tension primary wire and cable as defined by SAE Standard J1128.

New radiation-curable wire and cable insulation compositions are needed. Ideally, the new composition does not utilize halogenated flame retardants and meets the stringent needle abrasion requirements.

### SUMMARY OF THE INVENTION

The invention is a radiation-curable insulation composition. The composition comprises from 5% to 35%, by weight, of an ethylene-vinyl acetate copolymer (EVA), 30% to 65% of a high density polyethylene (HDPE), 30% to 60% of a metal hydroxide, 0.5% to 5% of a mercaptobenzimidazole salt, 0.05% to 5% of a phenolic antioxidant, 0.05% to 5% of zinc oxide, and 0.5% to 5% of a crosslinking agent. The composition of the invention provides the wire and cable insulation with improved abrasion resistance.

### DETAILED DESCRIPTION OF THE INVENTION

The composition of the invention comprises from 5 to 35 wt%, preferably 10 to 25 wt%, and more preferably 10 to 20 wt%, of an ethylene-vinyl acetate copolymer (EVA). Suitable EVA for the composition of the invention comprises preferably from 10 to 30 wt%, more preferably from 15 to 25 wt%, of vinyl acetate, and preferably from 70 to 90 wt%, and more preferably from 75 to 85 wt%, of ethylene. Suitable EVA optionally comprises a third monomer. Suitable third monomers are preferably selected from the group consisting of C₃-C₁₀ α-olefins, vinyl aromatics, alkyl acrylates, alkyl methacrylates, the like, and mixtures thereof. Examples of C₃-C₁₀ α-olefins include propylene, 1-butene, 1-hexene, 1-octene, the like, and mixtures thereof. Examples of vinyl aromatics include styrene, α-methyl styrene, *p-*methyl styrene, *p*-t-butyl styrene, the like, and mixtures thereof. Examples of alkyl acrylates and methacrylates include methyl acrylate, methyl methacrylate, ethyl acrylate, ethyl methacrylate, butyl acrylate, butyl methacrylate, the like, and mixtures thereof. Generally, a third monomer, if present, will constitute less 15 wt% of the EVA composition. Preferably the EVA has a melt index (Ml₂) from 0.1 to 10 dg/min and, more preferably, from 0.3 to 5 dg/min, determined in accordance with ASTM D 1238.

The composition of the invention comprises from 30 to 65 wt%, preferably 35 to 65 wt%, and more preferably 35 to 45 wt%, of a high density polyethylene (HDPE). Suitable HDPE has a density preferably from 0.940 to 0.965 g/cm³, more preferably from 0.945 to 0.965 g/cm³, and most preferably from 0.945 to 0.955 g/cm³. Suitable HDPE has a melt index (Ml₂) preferably from 0.01 dg/min to 50 dg/min, more preferably from 0.1 dg/min to 50 dg/min, and most preferably from 0.1 dg/min to 10 dg/min, determined in accordance with ASTM D 1238. Suitable HDPE includes ethylene homopolymers and copolymers of ethylene with C₃-C₁₀ α-olefins. Suitable C₃-C₁₀ α-olefins include propylene, 1-butene, 1-hexene, 1-octene, the like, and mixtures thereof. The amount of C₃-C₁₀ α-olefins incorporated into HDPE determines the density of HDPE. The more C₃-C₁₀ α-olefins are incorporated, the lower the density of HDPE. Preferably the HDPE contains less than 5 wt% of C₃-C₁₀ α-olefins. Suitable HDPE includes those made by Ziegler-Natta, single-site, and any other olefin polymerization catalysts.

The composition comprises from 30 to 60 wt%, preferably from 30 to 50 wt%, and more preferably from 35 to 45 wt%, of a metal hydroxide. Examples of suitable metal hydroxyl for the composition of the invention include aluminum hydroxides, magnesium hydroxides, hydrated calcium silicate, hydrated magnesium carbonates, the like, and mixtures thereof. Preferably the metal hydroxide is treated with silane compounds. More preferably the metal hydroxide is treated with an amino polysiloxane. A particularly preferred metal hydroxide is amino polysiloxane-treated magnesium hydroxide.

The composition comprises from 0.5 to 5 wt%, preferably from 0.5 to 2.5 wt%, more preferably from 1 to 2.5 wt%, of a mercaptobenzimidazole salt. Suitable mercaptobenzimidazole salts include zinc, calcium, and magnesium salts. Zinc salts are particularly preferred. Preferably the zinc salts have the general formula: 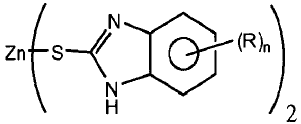 R groups can be the same or different and are preferably C₁₋₄ alkyl groups. Number n is from 0 to 4. Examples of suitable zinc mercaptobenzimidazole salts include zinc 2-mercaptobenzimidazole (ZMB) and zinc 2-mercaptotolylimidazole (ZMTI). ZMTI is particularly preferred.

The composition comprises from 0.05 to 5 wt%, preferably from 0.05 to 2.5 wt%, and more preferably from 0.1 to 1 wt%, of a phenolic antioxidant. Suitable phenolic antioxidants include those known in the industry. Examples are 2,4-dimethyl-6-t-butylphenol, pentaerythrityl tetrakis[3-(3,5-di-tert-butyl-4-hydroxyphenol) propionate], 2,2'-thiodiethylene bis[3-(3,5-di-*tert*-butyl-4-hydroxyphenyl)propionate], 4,4'-thiobis(2-*tert*-butyl-5-methylphenol), 2,2'-thiobis(4-methyl-6-tert-butyl-phenol), the like, and mixtures thereof. Suitable phenolic antioxidants also include polymeric phenolic antioxidants which comprise a recurring unit selected from the group consisting of the general structure (I), structure (II), and mixtures thereof 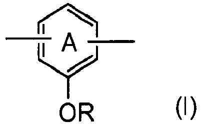 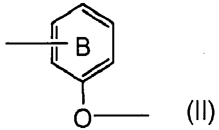 R is selected from the group consisting of hydrogen, alkyl, acyl, and aryl; ring A and ring B are each independently substituted with at least one tert-butyl group or n-alkoxycarbonyl group; and ring A and ring B are each independently substituted with at least one substituent selected from the group consisting of hydroxyl, amino, thiol, alkyl, aryl, and alkoxycarbonyl groups. Preferably, the polymeric antioxidant has a weight average molecular weight within the range of about 500 to about 2,000,000, more preferably from about 1,000 to about 100,000, and most preferably from about 2,000 to about 10,000. Methods for making the phenolic polymeric antioxidants are known. For example, U.S. Pat. No. 7,223,432, the teachings of which are incorporated by reference, discloses the synthesis of phenolic polymeric antioxidants by enzyme or an enzyme mimetic capable of polymerizing a substituted benzene compound in the presence of hydrogen peroxide. Many phenolic antioxidants are commercially available. For instance, pentaerythrityl tetrakis(3-(3,5-di-tert-butyl-4-hydroxyphenol)propionate) is available from Ciba Inc. under the name of Irganox® 1010.

The composition of the invention comprises from 0.05 to 5 wt%, preferably from 0.1 to 5 wt%, more preferably from 0.1 to 2.5 wt%, and most preferably from 0.25 to 1 wt%, of zinc oxide.

The composition comprises 0.5% to 5 wt%, preferably from 0.5 to 2.5 wt%, and more preferably from 1 to 2.5 wt%, of a crosslinking agent. Suitable crosslinking agents are multifunctional monomers which have two or more carbon-carbon double bonds. They include multifunctional vinyl monomers, acrylate and methacrylate monomers, and allyl monomers. Examples of multifunctional vinyl monomers include ethylene glycol divinyl ether, propylene glycol divinyl ether, triethylene glycol divinyl ether, divinyl urethanes, divinyl polyesters, the like, and mixtures thereof. Examples of multifunctional allyl monomers include diallyl phthalates, trimethylolpropane diallyl ether, triallyl cyanurate, allyl acrylate, allyl methacrylate, the like, and mixtures thereof. Examples of suitable multifunctional acrylates and methacrylates include trimethylolpropane triacrylate and trimethacrylate, glyceryl propoxy triacrylate and trimethacrylate, alkoxylated bisphenol A diacrylate and dimethacrylate, 1,4-butanediol diacrylate and dimethacrylate, the like, and mixtures thereof. Multifunctional acrylates and methacrylates are preferred. Trifunctional acrylates and methacrylates are particularly preferred. Optionally, the composition comprises other monomers. Suitable monomers include vinyl ethers, vinyl esters, vinyl aromatics, alkyl acrylates, alkyl methacrylates, allyl ethers, and allyl esters. A combination of various monomers can be used to achieve desired physical properties of the end products.

The composition of the invention optionally comprises other additives, fillers, and modifiers. They include foaming agents, free radical initiators, photo initiators, nucleation agents, processing aids, antistatic agents, lubricants, optical brighteners, pigments, dispersants, water-blocking agents, the like, and mixtures thereof. Optional additives and fillers are used in an amount preferably from 0.05 wt% to 60 wt%, more preferably from 0.05 wt% to 35 wt%, of the composition.

The composition of the invention can be made by mixing the various components. Any suitable mixing methods known in the industry can be used. Melt blending is a preferred method. The various components can be mixed in different orders including the masterbatch approaches. In one type of melt blending operation useful in this invention, the individual components are combined in a mixer, and therein heated to a temperature sufficient to form a polymer melt.

The invention includes a radiation-cured composition. Radiation curing procedures are known in the art, e.g., see Itzkoff, et al., Wire Journal International, pp. 60-71 (May, 1982). The irradiation-cured composition of the invention is highly useful as insulating coatings for metal conductors, especially for 1 to 30 AWG copper and aluminum, single or multi-strand wire or cable. The composition is typically applied by extruding a substantially uniform 2 to 100 mil thick layer onto the metal conductor. More typically, insulation thickness will range from 10 to 60 mils. The composition is especially useful for the manufacture of wire for automotive underhood applications and for 125°C rated wire applications. Insulated wires coated with compositions produced in accordance with the invention meet the ISO needle abrasion test and SAE sandpaper abrasion test.

The composition may also be used for other applications. For example, it can be extruded onto pipes and conduits for electrical and other applications. They can also be coextruded with one or more other thermoplastic materials to produce useful laminated constructions.

### EXAMPLE 1

### COMPOSITION COMPRISING ZMTI, PHENOLIC ANTIOXIDANT, AND ZINC OXIDE

EVA (13.31 parts by weight; Ultrathene® UE624000, product of Equistar Chemicals, LP, ethylene content: 82 wt%; vinyl acetate content: 18 wt%; Ml₂: 2 dg/min), HDPE (41.19 parts by weight; Petrothene® LR590001, product of Equistar Chemicals, LP; density: 0.948 g/cm³; Ml₂: 0.80 dg/min), amino polysiloxane treated magnesium hydroxide (40.83 parts by weight, Magnifin® H10IV; product of Albemarle Corp.), zinc 2-mercaptotolylimidazole (1.69 parts by weight, Vanox® ZMTI, product of R. T. Vanderbilt Company, Inc.), pentaerythrityl tetrakis(3-(3,5-di-tert-butyl-4-hydroxyphenol)propionate (0.80 part by weight; Irganox 1010, product of Ciba Inc.), zinc oxide (0.51 part by weight), and trimethylolpropane trimethacrylate (1.67 parts by weight; SR350, product of Sartomer Company, Inc.) are mixed in a Banbury® mixer at 177°C and then pelletized. The mixture is extruded onto copper wire using a conventional continuous extrusion line to produce an ISO Class 3 cable construction. A 10 mil thick insulation layer is applied onto 22 gauge 7-strand copper wire and the coated wire cured by irradiating using an e-beam source at 15 Mrads. The insulated wire has a smooth, uniform surface and met selected requirements of ISO6722: "Road vehicles-60 V and 600 V single-core cables—Dimensions, test methods and requirements." Sandpaper abrasion resistance and needle abrasion resistance values are 320 mm and 518 cycles, respectively. The samples pass 10 days under the accelerated aging test at 165°C (ASTM D412).

### COMPARATIVE EXAMPLE 2

### COMPOSITION COMPRISING PHENOLIC ANTIOXIDANT, BUT NO ZMTI AND ZINC OXIDE

The general procedure of Example 1 is repeated, but EVA (13.63 parts by weight), HDPE (42.09 parts by weight), amino polysiloxane treated magnesium hydroxide (41.74 parts by weight), pentaerythrityl tetrakis(3-(3,5-di-tert-butyl-4-hydroxyphenol)propionate (0.81 part by weight), thiodiethylene bis (3,5-di-tert-butyl-4-hydroxyhydrocinnamate) (0.07 part by weight, Irganox 1035, product of Ciba Inc.), and trimethylolpropane trimethacrylate (1.67 parts by weight) are mixed. Sandpaper abrasion resistance and needle abrasion resistance values are 260 mm and 601 cycles, respectively. The samples crack in less than 7 days under the accelerated aging test.

### COMPARATIVE EXAMPLE 3

### COMPOSITION COMPRISING ZMTI AND HINDERED AMINE ANTIOXIDANT, BUT NO PHENOLIC ANTIOXIDANT AND ZINC OXIDE

The general procedure of Example 1 is repeated, but EVA (13.0 parts by weight), HDPE (41.5 parts by weight), amino polysiloxane treated magnesium hydroxide (41.24 parts by weight), zinc 2-mercaptotolylimidazole (1.69 parts by weight), 4,4'-bis(α,α,-dimethylbenzyl)diphenylamine) (0.57 part by weight, Naugard® 445, product of Chemtura Corp.), and trimethylolpropane trimethacrylate (1.67 parts by weight) are mixed. Sandpaper abrasion resistance and needle abrasion resistance values are 233 mm and 452 cycles, respectively. The samples crack in less than 7 days under the accelerated aging test.

**TABLE 1**

| | RESULTS SUMMARY | | |
|---|---|---|---|
| **Ex. No** | **1** | **C2** | **C3** |
| Components, part by weight | | | |
| EVA | 13.31 | 13.63 | 13.47 |
| HDPE | 41.19 | 42.09 | 41.60 |
| Magnesium Hydroxide | 40.83 | 41.74 | 41.00 |
| ZMTI | 1.69 | - | 1.69 |
| Irganox 1010 | 0.80 | 0.81 | - |
| Zinc Oxide | 0.51 | - | - |
| Irganox 1035 | - | 0.07 | - |
| Naugard 445 | - | - | 0.57 |
| Trimethylolpropane trimethacrylate | 1.67 | 1.67 | 1.67 |

| Test Results | | | |
|---|---|---|---|
| Needle Abrasion, cycles | 518 | 601 | 450 |
| Sandpaper Abrasion, mm | 320 | 260 | 233 |
| Accelerated Aging @165°C | 10 days | <7 days | <7 days |

## Claims

1. A radiation-curable insulation composition comprising from 5% to 35%, by weight, of an ethylene-vinyl acetate copolymer (EVA), 30% to 65% of a high density polyethylene (HDPE), 30% to 60% of a metal hydroxide, 0.5% to 5% of a mercaptobenzimidazole salt, 0.05% to 5% of a phenolic antioxidant, 0.05% to 5% of zinc oxide, and 0.5% to 5% of a crosslinking agent.

2. The composition of claim **1** wherein the mercaptobenzimidazole salt is a zinc 2-mercaptotoluimidazole.

3. The composition of claim **1** which comprises 10% to 20% of EVA.

4. The composition of claim **1** wherein the EVA comprises from 10% to 30% of vinyl acetate.

5. The composition of claim **4** wherein the EVA comprises from 15% to 25% of vinyl acetate.

6. The composition of claim **5** wherein the EVA has a melt index from 0.3 to 5 dg/min.

7. The composition of claim **1** wherein the HDPE has a density from 0.940 to 0.965 g/cm³.

8. The composition of claim **7** wherein the HDPE has a density from 0.945 to 0.955 g/cm³.

9. The composition of claim **1** wherein the metal hydroxide is an amino polysiloxane-treated metal hydroxide.

10. The composition of claim **9** wherein the metal hydroxide is an amino polysiloxane-treated magnesium hydroxide.

11. The composition of claim **1** wherein the crosslinking agent is a multifunctional acrylate or methacrylate.

12. A radiation-cured composition of claim **1**.

13. An article comprising the composition of claim **12**.

14. The article of claim **13** which is an extrusion-coated wire or cable.

15. The article of claim **14** wherein the wire or cable is a copper wire.

## Patentansprüche

1. Strahlungshärtbare Isolierungszusammensetzung, umfassend von 5 bis 35 Gew.-% eines Ethylen-Vinylacetat-Copolymers (EVA), 30 bis 65 % eines Polyethylens hoher Dichte (HDPE), 30 bis 60 % eines Metallhydroxids, 0,5 bis 5 % eines Mercaptobenzimidazolsalzes, 0,05 bis 5 % eines phenolischen Antioxidans, 0,05 bis 5 % Zinkoxid und 0,5 bis 5 % eines Vernetzungsmittels.

2. Zusammensetzung nach Anspruch 1. wobei das Mercaptobenzimidazolsalz ein Zink-2-mercaptotoluimidazol ist.

3. Zusammensetzung nach Anspruch 1, die 10 bis 20 % EVA umfasst.

4. Zusammensetzung nach Anspruch 1, wobei das EVA von 10 bis 30 % Vinylacetat umfasst.

5. Zusammensetzung nach Anspruch 4, wobei das EVA von 15 bis 25 % Vinylacetat umfasst.

6. Zusammensetzung nach Anspruch 5, wobei das EVA einen Schmelzindex von 0,3 bis 5 dg/min aufweist.

7. Zusammensetzung nach Anspruch 1, wobei das HDPE eine Dichte von 0,940 bis 0,965 g/cm³ aufweist.

8. Zusammensetzung nach Anspruch 7, wobei das HDPE eine Dichte von 0,945 bis 0,955 g/cm³ aufweist.

9. Zusammensetzung nach Anspruch 1, wobei das Metallhydroxid ein Aminopolysiloxan-behandeltes Metallhydroxid ist.

10. Zusammensetzung nach Anspruch 9, wobei das Metallhydroxid ein Aminopolysiloxan-behandeltes Magnesiumhydroxid ist.

11. Zusammensetzung nach Anspruch 1, wobei das Vernetzungsmittel ein multifunktionelles Acrylat oder Methacrylat ist.

12. Strahlungsgehärtete Zusammensetzung nach Anspruch 1.

13. Gegenstand, umfassend die Zusammensetzung nach Anspruch 12.

14. Gegenstand nach Anspruch 13, der ein extrusionsbeschichteter Draht oder ein extrusionsbeschichtetes Kabel ist.

15. Gegenstand nach Anspruch 14, wobei der Draht oder das Kabel ein Kupferdraht ist.

## Revendications

1. Composition isolante durcissable par un rayonnement comprenant 5% à 35%, en poids, d'un copolymère d'éthylène-acétate de vinyle (EVA), 30% à 65% de polyéthylène haute densité (HDPE), 30% à 60% d'un hydroxyde de métal, 0,5% à 5% d'un sel de mercaptobenzimidazole, 0,05% à 5% d'un antioxydant phénolique, 0,05% à 5% d'oxyde de zinc et 0,5% à 5% d'un agent de réticulation.

2. Composition selon la revendication 1, le sel de mercaptobenzimidazole étant un 2-mercaptotoluylimidazole de zinc.

3. Composition selon la revendication 1, comprenant 10% à 20% d'EVA.

4. Composition selon la revendication 1, l'EVA comprenant 10% à 30% d'acétate de vinyle.

5. Composition selon la revendication 4, l'EVA comprenant 15% à 25% d'acétate de vinyle.

6. Composition selon la revendication 5, l'EVA présentant un indice de fusion de 0,3 à 5 dg/min.

7. Composition selon la revendication 1, le HDPE présentant une densité de 0,940 à 0,965 g/cm³.

8. Composition selon la revendication 7, le HDPE présentant une densité de 0,945 à 0,955 g/cm³.

9. Composition selon la revendication 1, l'hydroxyde de métal étant un hydroxyde de métal traité par de l'aminopolysiloxane.

10. Composition selon la revendication 9, l'hydroxyde de métal étant un hydroxyde de magnésium traité par de l'aminopolysiloxane.

11. Composition selon la revendication 1, l'agent de réticulation étant un acrylate ou un méthacrylate multifonctionnel.

12. Composition durcie par un rayonnement selon la revendication 1.

13. Objet comprenant la composition selon la revendication 12.

14. Objet selon la revendication 13, qui est un fil métallique ou un câble, revêtu par extrusion.

15. Objet selon la revendication 14, le fil métallique ou le câble étant un fil de cuivre.
